# EUROPÄISCHE PATENTSCHRIFT

(11) **EP 0 379 649 B1**
(45) Veröffentlichungstag und Bekanntmachung des Hinweises auf die Patenterteilung: **25.08.1993**
(21) Anmeldenummer: 89119463.1
(22) Anmeldetag: 20.10.1989
(51) Int. Cl.: B21D 28/26, B21D 22/04

(54) **Verfahren zum Herstellen von Durchzügen an Blechteilen**
Method for manufacturing rim holes in sheet metal blanks
Procédé de réalisation de passages traversants à collet dans un flan de tôle

(30) Priorität: 24.12.1988 DE 3843890
(43) Veröffentlichungstag der Anmeldung: 01.08.1990
(73) Patentinhaber: Griesemer, Albert, D-56457 Westerburg (DE)
(72) Erfinder: Griesemer, Albert, D-56457 Westerburg (DE)
(74) Vertreter: Grommes, Karl F., Dr.

(56) Entgegenhaltungen:
- EP-A- 0 178 180
- US-A- 3 365 926
- WERKSTATTSTECHNIK, Band 62, Nr. 7, Juli 1972, Springer-Verlag, Berlin; G.OEHLER: "Blechdurchzüge für Gewinde", Seiten 386-388

## Beschreibung

Die Erfindung betrifft ein Verfahren zum Herstellen von Durchzügen an Blechteilen, bei dem das Blechteil schrittweise mit Hilfe von Verformungswerkzeugen von einer ursprünglich flachen Form partiell in die Form des gewünschten Durchzugs überführt wird, was durch Auflegen und flächiges Andrücken im Bereich der Raudzone des Blechteils auf das mit einer Ausnehmung versehene Unterteil eines Verformungswerkzeugs sowie Eindrücken des Blechteils mittels des Oberteils des Verformungswerkzeugs in die Ausnehmung des Unterteils geschieht. Ein solches Verfahren ist aus Dokument US-A-3 365 926, das als mächstliegeuder Stand der Technik ausgesehen wird, bekannt.

Mit Blechteilen sind hier allgemein Formteile und insbesondere Stanz-, Biege- und/oder Prägeteile aus Blechen, Bändern o. dgl. gemeint. Die Durchzüge stellen stärker verformte Bereiche an solchen Formteilen dar; sie ähneln einer Hülse oder Büchse und werden oft auch als Kragen bezeichnet. In der Regel werden sie mit einem Innengewinde versehen und dienen dann als Mutternersatz. Derartige Formteile finden in verschiedenen Bereichen des Metallbaus, namentlich des Fahrzeug- und Gerätebaus, aber auch der Elektroindustrie und anderer Industriezweige Anwendung.

### Stand der Technik

Bei dem Verformungsvorgang handelt es sich um einen Tiefziehvorgang. Dementsprechend kommen in aller Regel folgende Verformungswerkzeuge bzw. Teile davon zum Einsatz: als Unterteil ein sog. Ziehring mit geeigneter Ausnehmung sowie einem darin geführten Auswerfer, als Oberteil ein sog. Niederhalter oder Faltenhalter mit einem darin geführten Ziehstempel.

Zum Herstellen der gewünschten Durchzüge werden die Blechteile schrittweise immer stärker verformt, und zwar ausgehend von einer flachen Form, namentlich einem Flansch, einer Ronde oder Platine. Dabei kann der hier interessierende Verformungsvorgang selbst Teil eines Gesamtherstellungsverfahrens sein, nämlich der Gewinnung fertiger Formteile aus Halbzeugen. Hierfür kommen insgesamt verschiedene Bearbeitungsvorgänge in Betracht, wie Freistanzen, Biegen, Ziehen, Lochen, Prägen, Ausschneiden (Trennen). Wie bereits gesagt, erfolgt die Gesamtverformung schrittweise, d.h. es sind eine Reihe von Verformungswerkzeugen erforderlich für einen immer größeren Verformungsgrad. Diese Werkzeuge müssen sukzessive durchlaufen werden.

Was nun den Verformungsvorgang im einzelnen anbetrifft, so muß das Formteil zunächst auf das Unterteil des jeweiligen Verformungswerkzeuges aufgelegt und dort positioniert werden. Das Unterteil besitzt dafür in aller Regel eine spezielle Aufnahme. Darunter befindet sich eine Ausnehmung, welche eine Ausbuchtung des Blechteils nach dem jeweiligen Verformungsgrad zuläßt. Vor jeglicher Verformung wird jedoch zunächst das Blechteil außerhalb seiner Verformungszone flächig auf das Unterteil angedrückt, indem der Niederhalter (Faltenhalter) fest auf das Blechteil aufgefahren und nachfolgend damit ein gewisser Flächendruck erzeugt wird. Zur Stoßminderung werden die Andruckkräfte in der Regel über Federn aufgebracht.

Nachdem nun das Blechteil auf dem Unterteil fixiert ist, wird die jeweils vorgesehene Verformung begonnen, wozu der Ziehstempel aus dem Oberteil in Richtung auf das Unterteil ausgefahren wird. Im Zusammenwirken mit dem Ziehring ergibt sich der gewünschte Verformungsschritt in Richtung auf einen fertigen Durchzug. Nach der jeweiligen Verformung kann das Blechteil mittels des Auswerfers aus dem Ziehring gestossen werden.

Die Reihenfolge, mit der die jeweilige Verformung vorbereitet und eingeleitet sowie ausgeführt wird, ist nach bisheriger Praxis stets gleich und gilt auch als zwingend. Ebenso unterliegt der von Station zu Station in Betracht gezogene Verformungsgrad festen Regeln. Hierfür werden Durchmesser von Ronde und Ausnehmung (Ziehstempel) sowie die Tiefe des Stempeleindrucks (der Ausbuchtung) in feste mathematische Beziehung zueinander gesetzt.

Mit dem bekannten Verfahren ist es möglich, (Gewinde-) Durchzüge auch über normale Mutternhöhe hinaus (z. B. 6 mm für M 6-Gewinde) herzustellen. Einschränkend muß jedoch gesagt werden, daß dies nur bei kleinflächigen Ronden oder Flanschen gelingt. Zum Teil verringert sich dabei die Wandstärke des Durchzugs gegenüber der Dicke des Ausgangsmaterials. So müssen nicht selten Wandstärkeverluste bis zu 25 %, gelegentlich sogar bis zu 50 %, bezogen auf das Ausgangsmaterial, in Kauf genommen werden. Dies kann allerdings bei Gewindedurchzügen für normale Schraubverbindungen noch ausreichend sein.

Allerdings reduzieren sich mit größerer Kragenhöhe die Wandstärken derart, daß die Ausreißfestigkeit unter das zulässige Maß abfällt. Das bisherige Verfahren erlaubt also bestenfalls normale Schraubverbindungen, nicht dagegen Schraubverbindungen mit sehr hoher Ausreißfestigkeit. Dies gilt erst recht für größerflächige Blechzuschnitte (Ronden). Dabei ist es nicht einmal möglich, Gewindedurchzüge für normale Beanspruchungen herzustellen. Vielmehr müssen in solchen Fällen ersatzweise Schweiß- und Blechgewindemuttern aufgeschweißt werden, was natürlich sehr aufwendig ist.

### Darstellung der Erfindung

Hier setzt nun die Erfindung an. Sie will ein Verfahren angeben, welches es ermöglicht, auch aus großflächigen Ronden oder Blechzuschnitten (Gewinde-)Durchzüge von größerer Höhe und mit einer Wandstärke ähnlich der Dicke des Ausgangsmaterials herzustellen. Jene Durchzüge sollen auch für hochbeanspruchte Schraubverbindungen verwendet werden können und bei einem großen Teilespektrum das Aufschweißen von Schweiß- und Blechgewindemuttern entbehrlich machen. Letztlich soll damit eine rationelle und preiswerte Herstellung ermöglicht werden.

Diese Aufgabe wird nach dem Vorschlag der Erfindung auf überraschend einfache Weise dadurch gelöst, daß das flächige Andrücken erst erfolgt, nachdem mit dem Eindrücken bereits begonnen wurde.

Wie ersichtlich, soll jetzt eine geänderte Reihenfolge bei der Bearbeitung in den einzelnen Stationen gelten. Diese steht sozusagen im Widerspruch zu der bisherigen Praxis. Galt es bisher als Voraussetzung für eine definierte Verformung, daß die Randzonen zunächst fixiert und während der Verformung glatt gehalten wurden, so werden nach dem jetzigen Vorschlag die Randzonen zunächst in den Verformungsvorgang mit einbezogen und nachträglich wieder geglättet.

Wie sich in zahlreichen Versuchen gezeigt hat, lassen sich so selbst extreme Durchzugs- oder Kragenhöhen auch bei großflächigen Ronden oder Blechzuschnitten erreichen bei gleichzeitiger Erhaltung der Ausgangsmaterialdicke. Der Erfindung liegt die Erkenntnis zugrunde, daß es zur Verbesserung der bisherigen Ergebnisse in erster Linie besserer Bedingungen für den Materialfluß bedarf. Dieser sollte so wenig wie möglich gehemmt werden. So lassen sich auch die bei kleinflächigen Blechzuschnitten günstigeren Ergebnisse mit einem vergleichsweise ungehemmten Materialfluß erklären.

Das vorgeschlagene Verfahren führt aber nicht nur zu besseren Ergebnissen; es kann auch energiefreundlich ausgestaltet werden, je nach dem, wie weit zunächst der Zentralbereich verformt und anschließend die Randzonen zurückgeglättet werden. Mit diesen Gestaltungsmöglichkeiten verliert auch das Problem der Wärmeableitung an Brisanz.

Zur Durchführung des Verfahrens bedarf es keiner speziellen oder im Aufbau geänderten Verformungswerkzeuge, so daß keine zusätzlichen Investitionen erforderlich werden. Wie bisher auch lassen sich die Ergebnisse durch richtige Wahl und sorgfältige Beachtung der maßgeblichen Fertigungskriterien optimieren, wie Arbeits- und Verformungsgeschwindigkeit in Verbindung mit den jeweils erforderlichen Unter-und Oberdrücken sowie geeignete Schmier-, Gleit- und Ziehmittel.

Vorteilhaft erfolgt das flächige Andrücken, nachdem das Eindrücken in der jeweiligen Station bereits bis zur Hälfte durchgeführt worden ist.

Nach einem weiteren Vorschlag erfolgt das flächige Andrücken, kurz bevor das Eindrücken abgeschlossen ist.

### Kurze Beschreibung der Zeichnung

Weitere Einzelheiten und Vorteile werden nachstehend anhand der Zeichnung für verschiedene Verfahrenserzeugnisse beschrieben. Darin zeigen:
- Fig. 1: einen Durchzug, wie er für normale Schraubverbindungen in Betracht kommt, im Schnitt,
- Fig. 2: den Gegenstand von Fig. 1 in Draufsicht,
- Fig. 3: einen Durchzug, wie er für Schraubverbindungen mit hoher Ausreißfestigkeit Anwendung finden kann, in Draufsicht,
- Fig. 4: den Gegenstand von Fig. 1 im Schnitt,
- Fig. 5: ein fertiges Blechteil mit verschiedenen Gewindedurchzügen im Schnitt und
- Fig. 6: den Gegenstand von Fig. 5 in Draufsicht.

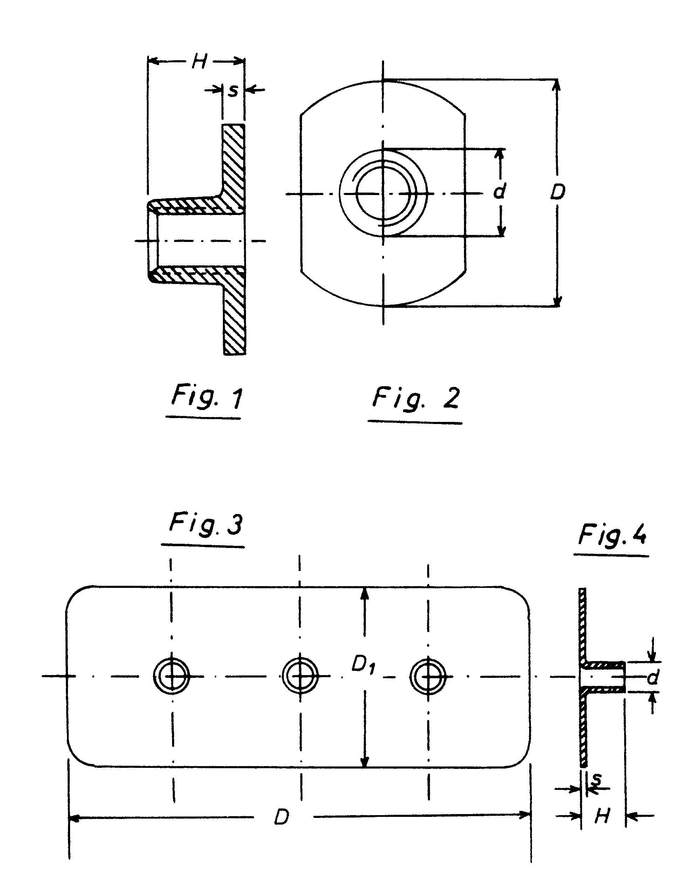

Nach den Fig. 1 und 2 kommen für Schraubverbindungen mit normaler Beanspruchung folgende Parameter und ungefähren Abmessungen in Betracht, beispielsweise für ein Gewinde M 8: ein Ausgangsmaterial mit der Dicke s = 2 mm, ein Ronden- oder Flanschdurchmesser D = 25 mm, ein Kragen-Außendurchmesser d = 10 mm und eine Kragenhöhe H = 10 mm. Da der gezeigte Durchzug aus einem kleinflächigen Blechzuschnitt geformt ist, kann er auch nach den bereits bekannten Verfahren hergestellt werden.

Anders verhält es sich dagegen mit den Durchzügen im Ausführungsbeispiel nach den Fig. 3 und 4. Sie lassen sich ausschließlich nach dem erfindungsgemäßen Verfahren gewinnen. So gelten jetzt bei gleichem Gewinde (M 8) und gleicher Dicke des Ausgangsmaterials (s = 2 mm) folgende Parameter und ungefähren Abmessungen: Ronden- oder Flanschdurchmesser D = 180 mm/D₁ = 80 mm, Kragen-Außendurchmesser d = 11,5 mm und Kragenhöhe H = 12 - 18 mm.

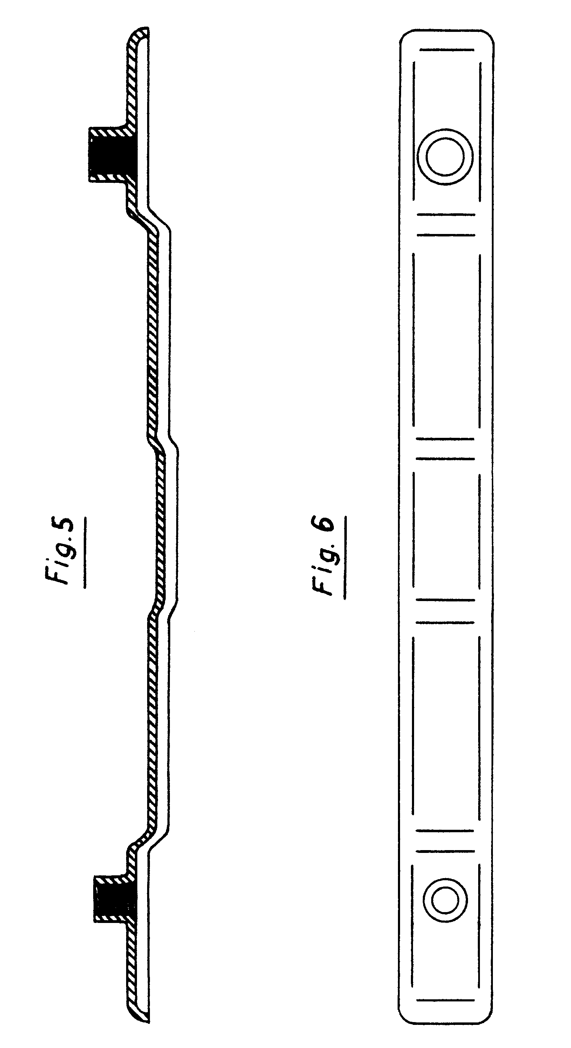

Ähnliches gilt für das weitere Ausführungsbeispiel gemäß den Fig. 5 und 6. Auch jenes ist bezüglich der Gewindedurchzüge nur noch mit dem erfindungsgemäßen Verfahren zu erreichen. Ansonsten kann das gezeigte Blechteil in herkömmlicher Weise erzeugt werden.

## Patentansprüche

1. Verfahren zum Herstellen von Durchzügen an Blechteilen, bei dem das Blechteil schrittweise mit Hilfe von Verformungswerkzeugen von einer ursprünglich flachen Form partiell in die Form des gewünschten Durchzugs überführt wird, was durch Auflegen und flächiges Andrücken im Bereich der Raudzone des Blechteils auf das mit einer Ausnehmung versehenen Unterteil eines Verformungswerkzeugs sowie Eindrücken des Blechteils mittels des Oberteils des Verformungswerkzeuges in die Ausnehmung des Unterteils geschieht, dadurch gekennzeichnet, daß das flächige Andrücken erst erfolgt, nachdem mit dem Eindrücken bereits begonnen wurde.

2. Verfahren nach Anspruch 1, dadurch gekennzeichnet, daß das flächige Andrücken erfolgt, nachdem das Eindrücken in der jeweiligen Station bereits bis zur Hälfte durchgeführt worden ist.

3. Verfahren nach Anspruch 1 oder 2, dadurch gekennzeichnet, daß das flächige Andrücken erfolgt, kurz bevor das Eindrücken abgeschlossen ist.

## Claims

1. Method of producing through passages in sheet metal parts whereby the sheet metal part is transformed gradually with the aid of deforming tools from an originally flat shape partially into the shape of the desired through passage which is done by placing and surface pressing in the region of the edge zone of the sheet metal part onto the lower part of a deforming tool provided with a groove, as well as by compressing the sheet metal part by means of the upper part of the deforming tool into the groove of the lower part, characterised in that the surface pressing first takes place after the compressing has already begun.

2. Method according to claim 1, characterised in that the surface pressing takes place after the compressing in the respective station has already been half accomplished.

3. Method according to claim 1 or 2 characterised in that the surface pressing takes place shortly before the compressing is completed.

## Revendications

1. Procédé pour réaliser des passages traversants à collet sur des pièces en tôle, dans lequel la pièce en tôle est amenée partiellement par étapes, à l'aide d'outils de déformation, depuis une forme initialement plate jusqu'à la forme du passage traversant à collet souhaité, ce qui a lieu en posant la pièce en tôle sur la partie inférieure munie d'un évidement d'un outil de déformation et en la serrant à plat dans la zone de son bord, ainsi qu'en enfonçant la pièce en tôle dans l'évidement de la partie inférieure au moyen de la partie supérieure de l'outil de déformation, caractérisé par le fait que le serrage à plat n'a lieu qu'après que l'enfoncement a déjà commencé.

2. Procédé selon la revendication 1, caractérisé par le fait que le serrage à plat a lieu après que l'enfoncement a déjà été réalisé jusqu'à la moitié dans le poste concerné.

3. Procédé selon la revendication 1 ou 2, caractérisé par le fait que le serrage à plat a lieu peu avant que l'enfoncement ne soit terminé.
